# EUROPÄISCHE PATENTSCHRIFT

(11) **EP 1 794 043 B1**
(45) Veröffentlichungstag und Bekanntmachung des Hinweises auf die Patenterteilung: **09.02.2011**
(21) Anmeldenummer: 05796487.6
(22) Anmeldetag: 21.09.2005
(51) Int. Cl.: B60T 10/02, F16D 33/00

(54) **VERFAHREN ZUR OPTIMIERUNG DER BETRIEBSWEISE EINER IN EINEM ANTRIEBSSTRANG EINES FAHRZEUGES INTEGRIERTEN HYDRODYNAMISCHEN KOMPONENTE**
METHOD FOR OPTIMISING THE OPERATION OF A HYDRODYNAMIC COMPONENT INTEGRATED INTO A DRIVE TRAIN OF A VEHICLE
PROCEDE POUR OPTIMISER LE MODE DE FONCTIONNEMENT D'UNE COMPOSANTE HYDRODYNAMIQUE INTEGREE DANS UNE CHAINE CINEMATIQUE D'UN VEHICULE

(30) Priorität: 02.10.2004 DE 102004048120
(43) Veröffentlichungstag der Anmeldung: 13.06.2007
(73) Patentinhaber: Voith Turbo GmbH & Co. KG, 89522 Heidenheim (DE)
(72) Erfinder: KLEY, Markus, 73479 Ellwangen (DE); LAUKEMANN, Dieter, 74541 Vellberg (DE)
(74) Vertreter: Dr. Weitzel & Partner
(86) Internationale Anmeldenummer: PCT/EP2005/010178
(87) Internationale Veröffentlichungsnummer: WO 2006/037465

(56) Entgegenhaltungen:
- EP-A- 1 380 485
- WO-A-00/55520
- DE-A1- 19 645 443

## Beschreibung

Die Erfindung betrifft ein Verfahren zur Optimierung der Betriebsweise einer in einem Antriebsstrang eines Fahrzeuges integrierten hydrodynamischen Komponente, insbesondere zur Optimierung des übertragbaren Momentes oder des verfügbaren Bremsmomentes, im Einzelnen mit den Merkmalen aus dem Oberbegriff des Anspruchs 1; ferner ein Verfahren zur Optimierung der Ausnutzung des zur Verfügung stehenden Bremsmomentes, im Einzelnen mit den Merkmalen aus dem Oberbegriff des Anspruches 2.

Als Bremseinrichtungen in Fahrzeugen finden neben hydraulischen oder mechanischen Systemen häufig hydrodynamische Retarder Verwendung. Diese sind an beliebiger Stelle im Antriebsstrang entweder als zusätzliche Bremseinrichtung oder Hauptbremseinrichtung integriert. Die Anordnung kann dabei bei Leistungsübertragung von der Antriebsmaschine zu den Rädern betrachtet vor dem Getriebe, im Getriebe oder hinter dem Getriebe erfolgen. Dabei wird dem hydrodynamischen Retarder herstellerseitig ein bestimmtes Kennfeld zugeordnet, das beispielsweise bei der Endabnahme als starres Ist-Kennfeld erstellt wurde und in Abhängigkeit des Fahrerwunsches nach einer bestimmten Verzögerung oder Erzeugung einer bestimmten Bremsleistung jedem Betriebspunkt in diesem Kennfeld eine entsprechende Stellgröße zuordnet. Als Stellgröße fungiert in der Regel ein Steuerdruck. In Abhängigkeit des gewählten Betriebsmittels und des dadurch bedingten Aufbaus des Betriebsmittelversorgungssystems sowie der Ansteuermöglichkeiten kann der Steuerdruck entweder einem statisch auf einen ruhenden Betriebsmittelspiegel aufbringbaren Druck, einem Stelldruck für die Betätigung einer Ventileinrichtung oder aber insbesondere bei Ausführung als Wasserpumpenretarder Drücken zur Steuerung der Zu- und Ablaufquerschnitte bzw. die sich dadurch ergebenden Differenzdrücken zum und vom hydrodynamischen Retarder entsprechen. In Abhängigkeit dieser vorgegebenen Sollkennfelder sowie der den einzelnen Betriebspunkten zugeordneten Stellgrößen und dem Fahrerwunsch erfolgt eine entsprechende Zuordnung und Ansteuerung der Stelleinrichtung des hydrodynamischen Retarders. Es hat sich dabei jedoch gezeigt, dass während des Betriebs des Fahrzeugs bei Verwendung dieser starren Kennfelder und der dieser zugeordneten starren Zuordnung zwischen der Stellgröße und den einzelnen Betriebspunkten häufig nicht die volle Bremsleistung ausgeschöpft wird, insbesondere der hydrodynamische Retarder damit nicht die maximal durch ihn zur Verfügung stellbare Bremsleistung in den entsprechenden Betriebspunkten erzeugt. Dies bedeutet im Einzelfall längere Bremswege und bei Nutzung als Dauerbremse aufgrund der erhöhten Bremsleistungsanforderung über längere Zeiträume zur Erzielung des gewünschten Ergebnisses eine entsprechende Bereitstellung von Kühlkapazitäten. Randbedingungen, die sich durch den Einbau, die Montage sowie andere Gegebenheiten während des Betriebes ergeben, können durch die starre Kennfeldvorgabe ebenfalls nicht berücksichtigt werden.

Die gleiche Problematik gilt in Analogie auch für hydrodynamische Kupplungen und hydrodynamische Drehzahl-/Drehmomentwandler, bei welchem das tatsächlich übertragbare Drehmoment für Baueinheiten gleichen Typs und der gleichen Randbedingungen aufgrund von Fertigungstoleranzen sehr stark variieren kann. Dies führt häufig dazu, dass nicht das theoretisch volle übertragbare Moment tatsächlich zur Verfügung steht und damit entweder von vornherein die hydrodynamischen Komponenten entsprechend größer dimensioniert werden oder aber nachträglich Maßnahmen baulicher Natur zum Ausgleich vorgenommen werden.

Zum schriftlichen Stand der Technik wird auf die folgenden Dokumente verwiesen:
DE 196 45 443 A1
WO 00/55520 A
EP 1 380 485 A

Der Erfindung liegt daher die Aufgabe zugrunde, ein Verfahren zur Optimierung der Ausnutzung der theoretisch zur Verfügung stehenden übertragbaren Leistung, insbesondere des Momentes in einem Fahrzeug mit einem Antriebsstrang, umfassend eine Antriebsmaschine und eine hydrodynamische Komponente mit einer dieser zugeordneten Stelleinrichtung derart zu entwickeln, dass möglichst auch das volle theoretisch übertragbare Moment in einem Betriebspunkt eines Sollkennfeldes ausgenutzt und übertragen wird und Überdimensionierungen somit vermieden werden. Insbesondere soll bei hydrodynamischen Retardern die volle theoretisch mit einem Retarder bestimmter Größe bei vorgegebener Befüllung zur Verfügung stehende Bremsleistung ausgenutzt werden, ohne zusätzliche bauliche Maßnahmen.

Die erfindungsgemäße Lösung ist durch die Merkmale der Ansprüche 1 und 2 charakterisiert. Vorteilhafte Ausgestaltungen sind in den Unteransprüchen wiedergegeben.

Erfindungsgemäß werden die durch Toleranzen oder andere, während des Betriebes der hydrodynamischen Komponente, insbesondere Kupplung, Wandler oder des hydrodynamischen Retarders in einem Antriebsstrang, insbesondere Antriebsstrang eines Fahrzeugs auftretenden Randbedingungen bedingten Streuungen in der mittels einer hydrodynamischen Komponente erzielbaren, das Übertragungsverhalten beschreibenden Ist-Kennlinie oder des Ist-Kennfeldes derart minimiert und somit die Istwerte an die das theoretisch mögliche Übertragungsverhalten beschreibende Soll-Kennlinie oder Soll-Kennfelder angepasst, dass die sich einstellenden Ist-Werte wenigstens in einem vordefinierten Toleranzbereich der Soll-Kennlinie oder des Soll-Kennfeldes der die Betriebsweise wenigstens mittelbar beschreibenden Größen liegen, vorzugsweise diesen direkt entsprechen, indem die Stellgröße angepasst, insbesondere adaptiert wird. Bei einem hydrodynamischen Retarder handelt es sich dabei um die mit diesem bei einem Bremsvorgang erzielbaren, diesen beschreibende Ist-Kennlinie oder Ist-Kennfeld, welche die Betriebsweise des hydrodynamischen Retarders wenigstens mittelbar charakterisieren. Dabei wird die Ist-Kennlinie derart an die theoretisch mit dem Retarder bestimmten Typs erreichbaren Soll-Kennlinien oder ein Soll-Kennfeld durch Adaption der Stellgröße angepasst, dass die sich einstellenden Ist-Werte wenigstens im Toleranzbereich der Soll-Kennlinie oder des Soll-Kennfeldes der die Betriebsweise des hydrodynamischen Retarders wenigstens mittelbar beschreibenden Größen liegen, vorzugsweise diesem direkt entsprechen. Die Ist-Kennlinie oder das Ist-Kennfeld enthalten die die Betriebsweise der hydrodynamischen Komponente - hydrodynamische Kupplung, Wandler oder hydrodynamischer Retarder wenigstens mittelbar charakterisierenden Größen. Dies wird dadurch gelöst, dass generell für eine hydrodynamische Komponente bestimmten Typs eine theoretische Soll-Kennlinie oder ein Soll-Kennfeld in einer Speichereinheit hinterlegt ist, wobei jedem Betriebspunkt der Soll-Kennlinie oder des Soll-Kennfeldes eine Soll-Stellgröße zur Einstellung dessen zugeordnet ist. In Abhängigkeit einer Vorgabe nach einem zu übertragenden Moment, einer Leistung bzw. einer diese wenigstens mittelbar beschreibenden Größen oder einer Vorgabe nach Erzeugung eines bestimmten Bremsmomentes, einer gewünschten Verzögerung oder einer anderen, den Bremsvorgang charakterisierenden Größe, beispielsweise ein Bremsweg etc. wird die Stelleinrichtung mit der zur Einstellung des gewünschten Betriebspunktes vorgegebenen Soll-Stellgröße angesteuert. Dies gilt vorzugsweise für den gesamten Übertragungs- bzw. Bremsvorgang, d. h. beispielsweise für den Bremsvorgang für den Aufbau des Bremsmomentes über die Zeitdauer des Bremsvorganges bzw. die Änderung der Drehzahl des abzubremsenden Elementes. Dazu werden die diese Größen wenigstens mittelbar charakterisierende Größen ermittelt und mit den entsprechenden Größen des jeweiligen Betriebspunktes der Soll-Kennlinie oder des Soll-Kennfeldes verglichen. Bei Abweichung wird die Stellgröße zur Einstellung zur wenigstens mittelbaren Beeinflussung der Ist-Werte der die einzelnen Betriebspunkte charakterisierenden Parameter für den jeweiligen Betriebspunkt geändert. Die geänderte Soll-Stellgröße wird für den jeweiligen Betriebspunkt als neue Soll-Stellgröße gespeichert, welche bei gewünschter erneuter gewünschter Einstellung des jeweiligen Betriebspunktes als Soll-Stellgröße zur Ansteuerung der Stelleinrichtung zur Beeinflussung des Übertragungsverhaltens, insbesondere des Momentes und bei Retardern des Bremsmomentes verwendet wird.

Die erfindungsgemäße Lösung kommt sowohl im Fahrbetrieb zum Einsatz als auch bei der Endprüfung des Fahrzeuges auf einem Prüfstand, insbesondere Rollenprüfstand. Für den Retarder wird dann gegen den Motor gebremst.

Die erfindungsgemäße Lösung ermöglicht es, auch bei größeren Bauteil- und Einbautoleranzen sowie unterschiedlichen Randbedingungen bei gleichen Anforderungen im wesentlichen immer das gleiche Moment zu übertragen bzw. die gleiche Bremsleistung bereitzustellen. Dies wird auf einfache Art und Weise durch die entsprechende Kalibrierung des Kennfeldes, insbesondere des Stellgrößen-Kennfeldes, realisiert. Damit wird eine Verbesserung der Abstimmung zwischen der Steuergröße und der Ausgangsgröße erzielt. Die neuen Soll-Stellgrößen werden dann für die einzelnen Betriebspunkte eines entsprechenden Kennfeldes oder einer Kennlinie in einem zumindest beschreib-und lesbaren Speicher hinterlegt. Im einfachsten Fall erfolgt diese Hinterlegung in einem der hydrodynamischen Komponente, insbesondere Kupplung, Wandler oder hydrodynamischer Retarder zugeordneten Eigenschaftsspeicher, wobei dieser vorzugsweise am Gehäuse der hydrodynamischen Komponente oder an kurzer räumlicher Entfernung zu diesem angeordnet sein kann. Der Eigenschaftsspeicher selbst kann dabei neben der Speicherung der Kennlinien, vorzugsweise jedoch Kennfelder, insbesondere des Stellgrößen-Kennfeldes und des Soll-Kennfeldes für die Betriebsweise des Retarders auch noch weitere die Betriebsweise und/oder die Funktionsweise des hydrodynamischen Retarders beschreibende Größen speichern. Dazu sind diesem entsprechende Eingänge zugeordnet, die mit entsprechenden Erfassungseinrichtungen gekoppelt sind. Vorzugsweise ist wenigstens eine Kommunikationsschnittstelle vorgesehen, die sowohl das Einlesen von Daten in den Eigenschaftsspeicher als-auch das Auslesen ermöglicht. Der Eigenschaftsspeicher ist zu diesem Zweck mit einem Datenkommunikationsnetzwerk oder einer Steuereinrichtung verbindbar. Dabei werden das Soll-Kennfeld bzw. die Soll-Stellgrößen beim Einsatz in Fahrzeugen in der Regel bei der ersten Inbetriebnahme in die Steuereinrichtung ausgelesen und dann in dieser bearbeitet und angepasst. Nach Anpassung der Stellgrößen-Kennlinien bzw. -Kennfeldern kann auch eine entsprechende Übermittlung wiederum an den Eigenschaftsspeicher erfolgen, so dass insbesondere bei einem Austausch der Steuereinrichtung die bereits für den hydrodynamischen Retarder zur Erzielung der optimalen Kennlinie ermittelten angepasste Soll-StellgrößenKennlinie auch der neuen Steuerung zur Verfügung steht. Dies heißt im Einzelnen, dass die entsprechende Ansteuerkennlinie immer bei der hydrodynamischen Komponente verbleibt. Dies ist jedoch nicht zwingend erforderlich. Denkbar ist es auch, die einzelnen Kennlinien-Soll-Kennlinien sowie Soll-Stellgrößen-Kennlinien und -Kennfelder in einer Steuereinrichtung zu hinterlegen und bei Bedarf zu bearbeiten. Die Steuereinrichtung kann dabei von einer zentralen Steuereinrichtung, die einer Mehrzahl von Komponenten des Antriebsstranges zugeordnet ist, gebildet werden oder aber einer separaten, der hydrodynamischen Komponente bzw. der diese umfassenden Einheit zugeordneten Steuereinrichtung. Letztere wiederum kann dabei am Gehäuse der Einheit oder der der hydrodynamischen Komponente oder auch in diesem angeordnet werden. Diese Steuereinrichtung dient dann während des Betriebes auch der Verarbeitung weiterer Soll- und Ist-Werte. Insbesondere können in der Steuereinrichtung neben der Verarbeitung der erfassten Ist-Werte auch die die Betriebsweise der hydrodynamischen Komponente wenigstens mittelbar charakterisierenden Größen erfasst und bearbeitet werden.

Bei den Ist-Werten wenigstens einer den Bremsvorgang wenigstens mittelbar charakterisierenden Größe, welche bei jedem Bremsvorgang ermittelt werden, vorzugsweise fortlaufend, handelt es sich dabei in der Regel um das Bremsmoment oder eine dieses wenigstens mittelbar beschreibende Größe, wobei diese Größen vorzugsweise über die Änderung der Drehzahl des abzubremsenden Elementes ermittelt wird. Dabei kann je nach gewünschter Bremsleistung entweder das Bremsmoment in Stufen oder aber stufenlos eingestellt werden. Im erstgenannten Fall setzt sich das Kennfeld aus wenigstens einer Kennlinie, vorzugsweise einer Vielzahl von einzelnen, den einzelnen Bremsstufen zugeordneten Kennlinien zusammen, während im anderen Fall jeder Betriebspunkt zwischen einer vorgegebenen Maximal- und Minimal-Bremsmomentverlaufskurve über eine die Drehzahl des abzubremsenden Elementes, vorzugsweise die Drehzahl des Rotorschaufelrades angefahren werden kann, wobei jedem einzelnen Betriebspunkt im Kennfeld auch eine entsprechende Soll-Stellgröße zugeordnet ist, die zur Einstellung dieses Betriebspunktes führen soll. Das einzelne Bremsmoment ist dabei eine Funktion der Stellgröße, insbesondere des Steuerdruckes. Dieser bestimmt die Füllung des Retarders.

Dies gilt in Analogie auch für hydrodynamische Komponenten in Form von Kupplungen und Wandlern. Die das Übertragungsverhalten charakterisierenden Größen werden dabei über die gesamte Übertragungszeitdauer, vorzugsweise fortlaufend oder in zeitlichen Intervallen erfasst bzw. ermittelt. Bei den das Übertragungsverhalten charakterisierenden Größen handelt es sich beispielsweise um das übertragbare Moment, die Wandlung oder wenigstens eine, diese Größen wenigstens mittelbar beschreibenden Größen.

Gemäß einer Weiterentwicklung der Erfindung wird immer ein bestimmter Toleranzbereich für das Soll-Kennfeld bzw. eine Soll-Kennlinie vorgegeben, wobei die diesen beschreibenden Grenzwerte entweder vordefinierbar oder aber festgelegt sind. Das Toleranzband, d. h. die Abweichung an einem Betriebspunkt nach oben und/oder unten, beträgt am Beispiel des Bremsmomentes dabei vorzugsweise maximal 20 % des Bremsmomentes.

Gemäß einer besonders vorteilhaften Weiterentwicklung wird eine prognostizierte bzw. vorausschauende Anpassung optional mit angeboten. Dies bedeutet, dass die Korrektur bzw. Adaption der Betriebspunkte zusätzlich abgespeichert wird. Dazu werden beispielsweise die erfolgten Anpassungen im Hinblick auf die ermittelten bzw. erzielten Betriebspunkte mit abgespeichert. Aus den unterschiedlichen Korrekturwerten und Anpassungen können somit Trends für zukünftige Anpassungen abgeleitet werden. So lag beispielsweise bei einer bestimmten Drehzahl n und Temperatur des Betriebsmittels ein bestimmter Stelldruck als Stellgröße vor, um ein bestimmtes Moment zu erreichen. Aufgrund der Alterung, insbesondere Kavitation der Kreislaufteile, zunehmende Undichtheiten im Kreislauf und damit ein schwer einzuhaltender Kreislaufdruck ist über der Zeit kontinuierlich einer Anpassung des Stelldruckes notwendig. Wird der Betriebspunkt nach längerer Zeit wieder angesteuert, kann aufgrund eines hinterlegten Algorhythmus der nun zu verwendende Steuerdruck quasi vorausgesagt werden. Dieser vorausschauenden Anpassung ist insbesondere für selten angefahrene Betriebspunkte sinnvoll. D. h. ein bestimmter Betriebspunkt sollte aufgrund seiner Historie, insbesondere der Änderung über der Zeit sowie der Historie der anderen, vornehmlich der benachbarten Betriebspunkte, insbesondere deren Änderungsveralten über die Zeit adaptiert werden.

Die Anpassung der Ist-Größen an die Sollgröße erfolgt bei Ermittlung einer Abweichung der die Betriebsweise charakterisierenden Ist-Größen, vorzugsweise bei einem Retarder bei einer das Bremsmoment charakterisierenden Ist-Größe in einem Betriebspunkt vom theoretisch einstellbaren Bremsmoment in diesem Betriebspunkt durch die Änderung der Stellgröße, wobei diese Änderung entweder funktional oder aber durch einen Korrekturwert erfolgen kann. Diese Änderung wird beim nächsten Durchlaufen dieses Betriebspunktes oder aber jedem n-ten Durchlauf durch den gleichen gewünschten Betriebspunkt bei Auftreten der Abweichung vorgenommen. Dies gilt in Analogie auch für die anderen möglichen hydrodynamischen Komponenten - Kupplung, Wandler. Hier handelt es sich bei den die Betriebsweise charakterisierenden Größen beispielsweise um das Moment.

Gemäß einer vorteilhaften Weiterentwicklung werden auch zusätzliche Abhängigkeiten miterfasst. Dabei wird beispielsweise berücksichtigt, dass das übertragbare Moment bei hydrodynamischen Kupplungen und Wandlern und das Bremsmoment bei hydrodynamischen Retardern stark von der Temperatur abhängig ist. Daher wird diese vorzugsweise ebenfalls miterfasst und somit ergibt sich ein zumindest dreidimensionales Kennfeld, wobei das Moment als Funktion der Stellgröße in Form des Stelldruckes und der Temperatur aufgetragen ist. Denkbar ist auch die Berücksichtigung weiterer Abhängigkeiten, so dass das Kennfeld für die die Betriebsweise wenigstens mittelbar charakterisierenden Größen immer mehrdimensional ist.

Bei Verwendung eines Korrekturwertes k kann es sich dabei um einen fest vorgegebenen Korrekturwert handeln, der auf die Stellgröße aufgesetzt wird, oder aber um einen berechen- oder ermittelbaren Korrekturwert, wobei dabei funktionale Zusammenhänge berücksichtigt werden können. Im einfachsten Fall ist der Korrekturwert eine feste Größe, welche bei Abweichung zum aktuell verwendeten Soll-Wert zur Einstellung der einzustellenden Ist-Größen summiert oder subtrahiert wird. Gemäß einer besonders vorteilhaften Ausgestaltung ist eine feinstufigere Abtastung möglich, um den Korrekturwert variabel zu halten, indem dieser in Abhängigkeit der zwischen zwei aufeinanderfolgenden gleichen Betriebspunkten bei mehrmaligem Durchlaufen des gleichen Betriespunktes ermittelten Werte berechnet wird. Dabei bestimmt sich die Stellgröße Yₛₒₗₗ beispielsweise aus dem Produkt der bei der letzten Einstellung des Betriebspunktes festgelegten Stellgröße und dem Quotienten aus dem aktuell ermittelten Moment, insbesondere bei Retardern dem Ist-Bremsmoment und dem ermittelten Ist-Bremsmoment bei der oder einer der vorhergehenden Einstellungen dieses Betriespunktes. Liegen dann die mit dem neuen Sollgrößenwert erzielbaren Betriebsparameter, insbesondere entsprechenden Ist-Werte für das Bremsmoment immer noch im Toleranzbereich der Soll-Kennwerte, wird die ermittelte Soll-Stellgröße als neue Soll-Stellgröße für diesen Betriebspunkt gesetzt und abgespeichert. Dabei kann jede Änderung der Sollgröße gespeichert werden.

Die erfindungsgemäße Lösung wird nachfolgend anhand von Figuren erläutert. Darin ist im Einzelnen folgendes dargestellt:
- Figur 1: verdeutlicht in schematisch vereinfachter Darstellung anhand eines Signalflussbildes eine besonders vorteilhafte Ausführung des erfindungsgemäßen Verfahrens;
- Figur 2: verdeutlicht in schematisch vereinfachter Darstellung den Grundaufbau und die Anordnung einer hydrodynamischen Komponente in einem Antriebsstrang zur Umsetzung des erfindungsgemäßen Verfahrens;
- Fig. 3a - 3c: verdeutlichen dabei anhand von Drehzahl-/Drehmomentdiagrammen das theoretisch vorgegebene Soll-Kennfeld für einen hydrodynamischen Retarder, das während des Betriebsdurchlaufs ermittelte Ist-Kennfeld mit Abweichungen und das mit dem erfindungsgemäßen Verfahren vorliegende korrigierte Kennfeld für den hydrodynamischen Retarder.

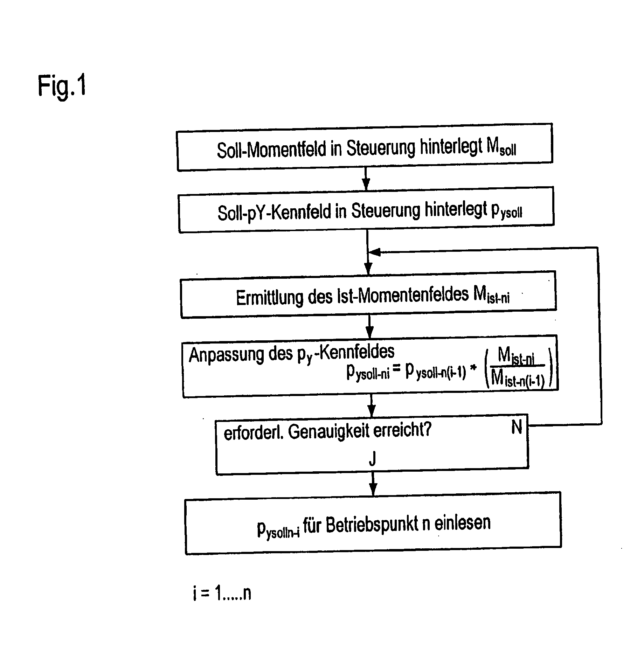

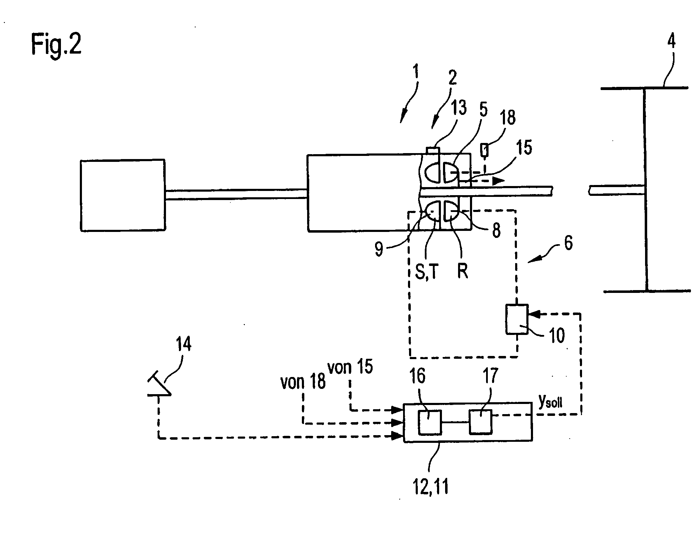

Die Figur 1 verdeutlicht in schematisch vereinfachter Darstellung den Grundablauf eines erfindungsgemäßen Verfahrens am Beispiel einer Optimierung der Bremsleistungsbereitstellung in einem Fahrzeug 1, umfassend einen Antriebsstrang 2 mit einer Antriebsmaschine 3, welche wenigstens mittelbar mit den anzutreibenden Rädern 4 gekoppelt ist. Im Antriebsstrang 2 ist eine hydrodynamische Komponente, im dargestellten Fall einer hydrodynamischen Bremseinrichtung 5 in Form eines hydrodynamischen Retarders angeordnet. Der Antriebsstrang 2 ist dabei in der Figur 2 in schematisch stark vereinfachter Darstellung hinsichtlich seiner funktionalen Zusammenhänge wiedergegeben. Die hydrodynamische Komponente in Form des Retarders 5 umfasst ein als Rotorschaufelrad R fungierendes Primärrad P und ein als Statorschaufelrad S fungierendes Sekundärrad T. Das Sekundärrad T steht dabei still. Dem Retarder 5 ist ein Betriebsmittelversorgungssystem 6 mit mindestens einer Stelleinrichtung 10 zugeordnet. Da die Bremsleitung des hydrodynamischen Retarders 5 in der Regel durch den im Arbeitsraum 7 vorhanden Füllungsgrad und/oder den Druckverhältnisse in den einzelnen Leitungen des

Betriebsmittelversorgungssystem 6, insbesondere in mindestens einem Einlass 8 in den Arbeitsraum und/oder einem Auslass 9 aus dem Arbeitsraum 7 bestimmt werden, ist der Bremseinrichtung 5 eine Stelleinrichtung 10 zugeordnet. Diese kann je nach Ausführung und Art der Beeinflussung des übertragbaren Bremsmomentes sowie Ausführung des Betriebsmittelversorgungssystems 6 des hydrodynamischen Retarders 5 verschiedentlich ausgeführt sein. Zur Einstellung eines die gewünschte Bremsleistung charakterisierenden Bremsmomentes M_{Brems} in Form einer vorgegebenen Soll-Kennlinie oder eines Soll-Kennfeldes für das theoretisch verfügbare und einstellbare Bremsmoment, ist der Stelleinrichtung 10 für jeden einzelnen Betriebspunkt des Soll-Kennfeldes bzw. der Soll-Kennlinie eine entsprechende Stellgröße Y zugeordnet. Diese ist entweder in einer Soll-Stellgrößenkennlinie oder aber in einem Soll-Stellgrößenkennfeld Yₛₒₗₗ mit Zuordnung zu einer entsprechenden Betriebspunkten der vordefinierten oder vorgegebenen Soll-Kennlinie für das einstellbare Bremsmoment des hydrodynamischen Retarders 5 wiedergegeben. Für jeden einzelnen hydrodynamischen Retarder, insbesondere für bau- und leistungsgleiche Typen, existieren derartig vordefinierte oder vorgegebene Soll-Kennlinien oder Kennfelder. Bei diesen handelt es sich in der Regel um Drehzahl/Drehmomentkennfelder, wobei hier die Drehzahl des Rotorschaufelrades R oder eines mit diesem wenigstens mittelbar, d. h. direkt oder über weitere Übertragungselemente und Übersetzungen gekoppeltes Element verstanden wird und das mit dem hydrodynamischen Retarder 5 erzielbare Bremsmoment M_{Brems}. Zur Erzielung dieser Soll-Kennlinie bzw. des Soll-Kennfeldes ist dabei jedem Betriebspunkt, d. h. jeder beliebigen Drehzahl, eine entsprechende Stellgröße Yₛₒₗₗ₁ bis Yₛₒₗₗₙ zugeordnet. Die Stellgröße Yₛₒₗₗ wird dabei in Abhängigkeit der aktuell vorliegenden Betriebsbedingungen über eine Steuereinrichtung 11, vorzugsweise in Form eines Steuergerätes 12, bereitgestellt. Die Soll-Kennlinie bzw. das Soll-Kennfeld für die Stellgröße Yₛₒₗₗ kann dabei von der Steuereinrichtung 11 je nach Zuordnung zum hydrodynamischen Retarder auch aus einem dem hydrodynamischen Retarder 5 zugeordneten beschreib- und lesbaren Speicher 13 ausgelesen und der Steuereinrichtung 10 zugeführt werden. Dann kann die Funktion der Steuereinrichtung 11, insbesondere die des Steuergerätes 12, von einer beliebigen, Komponente im Antriebsstrang beim Einsatz in Fahrzeugen zugeordneten Steuereinrichtung oder der zentralen Fahrsteuerung übernommen werden. Die Vorgabe eines gewünschten einzustellenden Bremsmomentes, einer Bremsleistung oder einer gewünschten Verzögerung oder einer anderen den Bremsvorgang wenigstens mittelbar beschreibenden Größe erfolgt dabei über eine Einrichtung 14 zur Vorgabe eines Fahrerwunsches nach Einstellung eines Bremsmomentes oder Verzögerung des Fahrzeuges. In der Regel ist diese Einrichtung in Form eines Bremspedals ausgeführt oder aber eines Bremsstufenwählhebels. Ferner sind Erfassungseinrichtungen zur Erfassung einer, die Ist-Drehzahl n_{Ist} des Primärrades P, insbesondere des Rotorschaufelrades R des hydrodynamischen Retarders 5 wenigstens mittelbar beschreibenden Größe vorgesehen. Diese Erfassungseinrichtung ist dabei mit 15 bezeichnet und kann im einfachsten Fall der mit dem Rotorschaufelrad R verbundenen Welle zugeordnet sein und in Form eines Sensors vorliegen, wobei dieser Sensor ein Signal für die Steuereinrichtung 11 generiert. Entsprechend dieses Signals wird aus dem in der Steuereinrichtung 11 hinterlegten Soll-Kennlinie für einen bestimmten Betriebszustand des hydrodynamischen Retarders die Stellgröße Yₛₒₗₗ bestimmt und zur Ansteuerung der Stelleinrichtung 10 verwendet. Dabei stellt sich für diese bestimmte Drehzahl n ein bestimmter Momentenwert am hydrodynamischen Retarder 5 ein, der mit M_{Ist} bezeichnet ist. Dieser oder eine diesen wenigstens unmittelbar, d. h. direkt oder über funktionierende Zusammenhänge oder Proportionalität charakterisierende Größe wird ebenfalls erfasst, beispielsweise mit einer Erfassungseinrichtung 18 und mit dem in der Steuereinrichtung 11 hinterlegten Soll-Kennfeld für die die Betriebsweise wenigstens mittelbar beschreibenden Größen verglichen. Der Istwert des Momentes kann auch an verschiedenen Größen berechnet werden. Besteht nunmehr eine Abweichung ist erfindungsgemäß vorgesehen, eine Anpassung der Stellgröße Y_{Soll} für diesen Betriebspunkt vorzunehmen und über dieses dann das vordefinierte bzw. vorgegebene Soll-Kennfeld oder die einzelne Kennlinie für das einzustellende Moment zu erzielen. Dabei wird die Stellgröße Y_{Soll} für diesen Betriebspunkt geändert. Diese Änderung kann unterschiedlich erfolgen. Im einfachsten Fall kann hier eine Anpassung jeweils um einen Korrekturwert vorgenommen werden, der bei erneute Einstellung des Betriebspunktes jedes Mal neu abgeglichen wird. Vorzugsweise wird diese Vorgehensweise für eine Mehrzahl von Betriebspunkten, vorzugsweise in bestimmten Abständen, beispielsweise Drehzahlabständen oder aber für alle Betriebspunkte gewählt. Im letzten Fall wird dabei jeweils der gesamte Betriebsbereich durchlaufen, der beispielsweise durch einen Drehzahlbereich bestimmt ist. Eine andere Möglichkeit besteht darin, die Stellgröße in Form eines funktionalen Zusammenhanges neu zu ermitteln. Diesbezüglich bestehen ebenfalls mehrere Möglichkeiten. Im einfachsten Fall werden dabei die bereits ohnehin ermittelten Größen vorhergehender Betriebsbereichsdurchläufe für gleiche Betriebspunkte, d. h. die ermittelten Ist-Werte verwendet. Auf eine Möglichkeit diesbezüglich wird in Figur 1 noch genauer eingegangen. Diese Anpassung wird dabei im einfachsten Fall ebenfalls in der Steuereinrichtung 11 vorgenommen. Diese umfasst dazu mindestens noch eine Vergleichseinrichtung 16 sowie eine Sollwert-Korrektureinrichtung 17. Dieser Vorgang wird so lange wiederholt, bis eine erforderliche Genauigkeit erzielt ist. Dies kann beispielsweise durch Vorgabe eines Toleranzbandes für eine bestimmte die Betriebsweise der hydrodynamischen Komponente 1 beschreibbaren Soll-Kennlinie erfolgen wobei der Ausgangsvorgang bei Erreichen eines Wertes innerhalb der Toleranzbandes für diesen Betriebspunkt abgebrochen wird. Denkbar ist dabei, das Toleranzband gleichmäßig über die gesamte Kennlinie zu legen oder aber auch in einzelnen Bereichen stärkere Abweichungen zuzulassen. Wird die erforderliche Genauigkeit erzielt, kann dann der jeweils für die einzelnen Betriebspunkte angepasste Sollwert Yₛₒₗₗ₋ₙₑᵤ für die einzelne Stellgröße Y abgespeichert werden, wobei dieses Sollgrößen-Kennfeld für die Stellgröße dann dem hydrodynamischen Retarder 5 mit beigegeben wird und für jede x-beliebige Steuerung verwendet werden kann.

Die Figur 1 verdeutlicht anhand eines Signalflussbildes das Grundprinzip des erfindungsgemäßen Verfahrens. Zu diesem Zweck wird für einen bestimmten Typ eines hydrodynamischen Retarders, insbesondere Retarder bestimmter Bauart und Baugröße, ein Soll-Kennfeld, welches die Betriebsweise des hydrodynamischen Retarders 5 beschreibt, in der Steuerung 11 hinterlegt, ferner ein entsprechendes Soll-Stellgrößenkennfeld. Bei dem die Betriebsweise beschreibenden Soll-Kennfeld handelt es sich dabei beispielsweise um ein Soll-Momentenfeld, wobei das Moment beim Retarder durch das Bremsmoment charakterisiert ist. Die einzelnen Momente über den gesamten Betriebsbereich sind dabei mit M_{Soll1} bis M_{Solln} bezeichnet. Jedem Betriebspunkt, insbesondere Soll-Moment im Momentenkennfeld, ist eine entsprechende Stellgröße Y, bei hydrodynamischen Komponenten vorzugsweise in Form eines Stelldruckes p_{Y} zugeordnet. Das sich daraus ergebende Soll-Stellgrößenkennfeld für p_{YSoll} besteht dabei aus einer Vielzahl einzelner Stellgrößen p_{YSoll1} bis p_{YSolln}. Vorzugsweise erfolgt die Korrelation zueinander über eine Drehzahl n des Rotors R. Das Soll-Momentenkennfeld für M_{Soll1} bis M_{Solln} ist dabei in einem Drehzahl/Drehmomentdiagramm abgelegt. Dabei kann das einzelne Kennfeld durch eine Mehrzahl einzelner Kennlinien vorgegeben werden. Vorzugsweise erfolgt die Korrelation über die Drehzahl n am Rotorschaufelrad des hydrodynamischen Retarder. Diese beiden Kennfelder - das Soll-Momentenkennfeld M_{Soll} und das Soll-Stellgrößenkennfeld p_{YSoll}- bilden dabei die Ausgangsbasis. Während des Bremsvorganges insbesondere des Einstellen eines bestimmten Bremsmomentes wird dann das aktuelle Ist-Momentenkennfeld M_{Ist} ermittelt, wobei dabei eine Vielzahl einzelner Momentenkennwerte M_{Ist1} bis M_{Istn} ermittelt werden, die beispielsweise im Bezug auf die Drehzahl am Rotorschaufelrad die einzelnen Betriebspunkte im Momentenkennfeld abbilden. Anhand eines Vergleiches des ermittelten Ist-Wertes, im dargestellten Fall des Momentes M_{Ist} mit dem Sollwert M_{Soll} im jeweiligen Betriebspunkt, wird ermittelt, ob dieser dem gewünschten Sollwerte entsprechend dem Soll-Momentenkennfeld entspricht. Ergibt der Vergleich eine Über- oder Unterschreitung des Soll-Wertes M_{Soll} für einen bestimmten Betriebspunkt durch M_{Ist-i}, wird die Stellgröße entsprechend angepasst, im dargestellten Fall beispielsweise verringert, während bei Unterschreitung eine Änderung der Stellgröße Y_{Solln} in Richtung einer Vergrößerung erfolgt. Diesbezüglich kann die Stellgröße Y, im dargestellten Fall py_{Soll}, lediglich durch Addition oder Subtraktion um einen Korrekturwert, welcher fest vorgegeben, frei definiert oder ermittelt werden kann, geändert werden. Eine andere Möglichkeit entsprechend der Ausführung gemäß Figur 1 besteht darin, hier einen funktionalen Zusammenhang herzustellen, insbesondere zwischen einzelnen für gleiche theoretisch im Soll-Kennfeld anzusteuernden Betriebspunkte (nᵢₛₜ₋ₙ, Mᵢₛₜ₋ₙ) sowie Änderungen der Stellgrößen p_{YSoll}. Dabei erfolgt beispielsweise für einen bestimmten Betriebspunkt, der durch ein bestimmtes Moment Mᵢₛₜ₋ₙ charakterisiert ist und sich über die Stellgröße p_{YSolln} einstellen lässt, beim wiederholten Durchlaufen über den gesamten Betriebsbereich für zwei gleiche einzustellende Betriebspunkte (nᵢₛₜ₋ₙ, Mᵢₛₜ₋ₙ) die aufeinanderfolgend ermittelten Werte berücksichtigt. Dabei ergibt sich die neu zu verwendende Stellgröße p_{YSollneu} aus dem Produkt des aktuellen angelegten Stelldruckes p_{YSolln-(i-1)}, der dessen vorgegebene Sollwert p_{YSoll} aus der letzten Einstellung des gleichen Betriebspunktes (nᵢₛₜ₋ₙ, Mᵢₛₜ₋ₙ) entspricht, und dem Quotienten aus dem aktuellen Moment Mᵢₛₜ₋ₙ₍ᵢ₋₁₎ aus der letzten Ermittlung im gleichen Betriebspunkt. Wird dann immer noch nicht die erforderliche Genauigkeit erreicht, wird die Korrektur weiterhin vorgenommen, d. h. wiederholt während der nächsten Durchläufe des Betriebspunktes n. n charakterisiert dabei einen konkreten Betriebspunkt. i verdeutlicht die Anzahl der wiederholten Einstellung des Betriebspunktes n. Liegt jedoch das dann vorliegende Ist-Moment Mᵢₛₜ₋ₙᵢ im Toleranzbereich, kann der dafür verwendete Stellgrößenwert p_{Ysoll-ni} für diesen Betriebspunkt n eingelesen werden. Dieser wird dann zu p_{YSollneu}. Vorzugsweise finden immer eine Mehrzahl derartiger Iterationsschritte statt. Dabei wird für jeden Betriebspunkt n diese Iteration immer betriebspunktbezogen vorgenommen. Dies bedeutet, dass beispielsweise unter der Voraussetzung eines bestimmten Füllungsgrades bei einer bestimmten Drehzahl n₂ als Sollwert für Stellgröße p_{YSoll} bei Drehzahl n₂ und einzustellendem Drehmoment M_{Soll} bei n₂ angesetzt wird und das aktuelle Moment M_{Ist2} bei n₂ ermittelt wird. Weicht M_{Ist2} von dem theoretisch eigentlich einzustellenden Sollwert M_{Soll2} bei gleicher Drehzahl n₂ ab, erfolgt die Korrektur der Stellgröße p_{YSoll2} für die bestimmten Drehzahl n₂ und das Moment M_{Soll2} für Drehzahl n₂. Dabei wird der Sollwert für die Stellgröße p_{YSoll2} neu bestimmt, indem dieser aus dem Produkt aus py_{Ist2} bei Drehzahl n₂ und dem Quotienten aus dem aus dem aktuellen Ist-Moment M_{Ist2} bei Drehzahl n₂ und der letzten Messung M_{Ist2-(1)} bei Drehzahl n₂ ermittelt. Wird dann die erforderliche Genauigkeit erreicht, kann dieser neue Sollwert als fest vorgegebener Sollwert für den bestimmten Betriebspunkt n eingelesen werden.

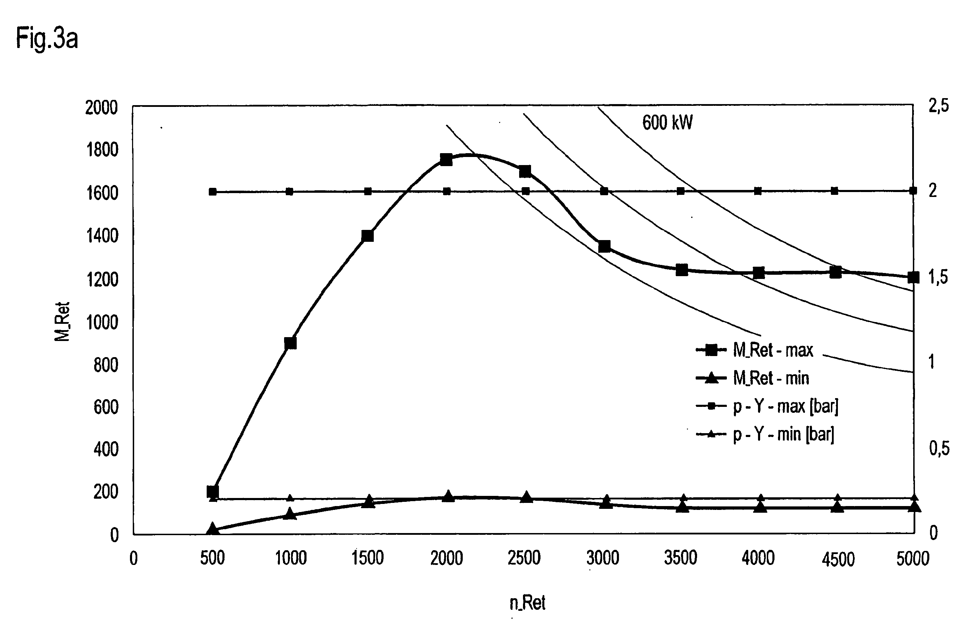

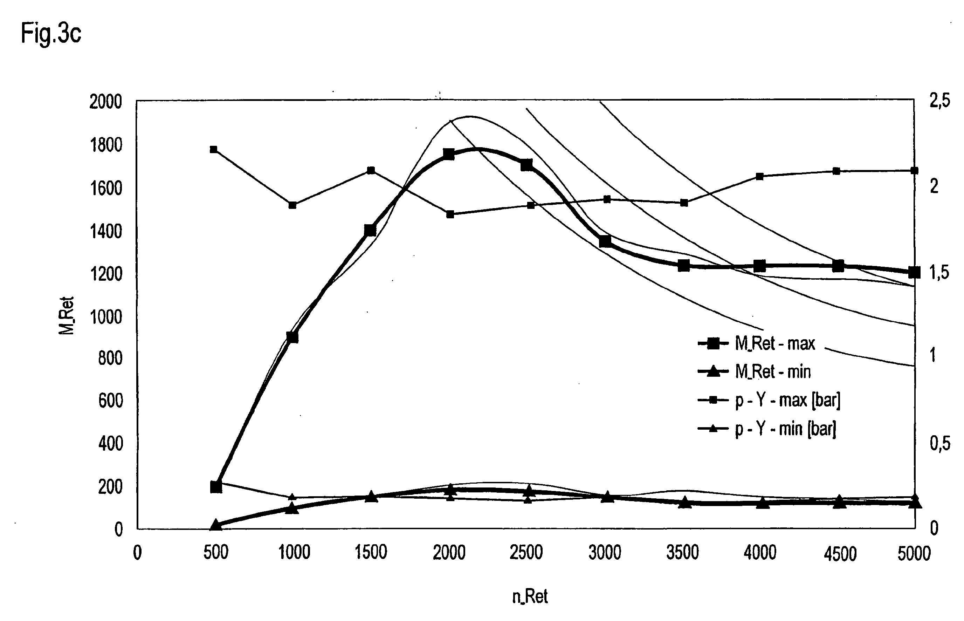

Die Figuren 3a bis 3c verdeutlichen anhand verschiedener Kennlinien die Anwendung des die Wirkung des erfindungsgemäßen Verfahrens. In der Figur 3a ist dabei das bei der Endprüfung zugrundegelegte Soll-Kennfeld für den hydrodynamischen Retarder wiedergegeben. Daraus ersichtlich ist, dass hier im wesentlichen zwei Retarderkennlinien unterschieden werden, die die Erzeugung eines maximalen Bremsmomentes M_{Ret-max} und M_{Ret-min} beschreiben. Dies ist auch immer abhängig vom Füllungsgrad FG des hydrodynamischen Retarders bzw. auch der eingelegten gewünschten Bremsstufe, so dass neben den hier dargestellten zwei unterschiedlichen Kennlinien auch eine Vielzahl derartiger Kennlinien vorgegeben werden kann. Jeder dieser Kennlinien, die hier mit M_{Ret-max} und M_{Ret-min} bezeichnet sind, ist eine entsprechende Stellgrößenkennlinie zugeordnet, die dementsprechend mit p_{Ymax} und p_{Ymin} bezeichnet ist. Die Kennlinien sind im sogenannten Drehzahl-/Drehmomentkennfeld (n/M-Diagramm) wiedergegeben. Die Drehzahl n wird beispielsweise von der Drehzahl des Retarders, insbesondere des Rotorschaufelrades R, beschrieben.

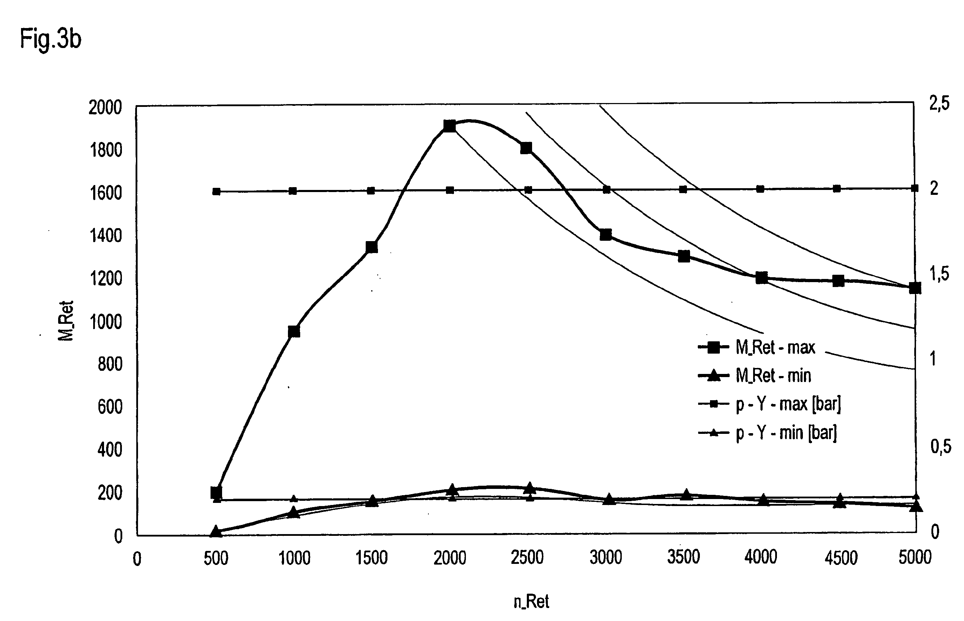

Demgegenüber offenbart Figur 3b das tatsächliche Ist-Kennfeld, wie es sich bei Anlegen der Stellgröße p_{YSoll} für die einzelnen Betriebspunkte ergibt. Daraus zu erkennen ist, dass es doch erhebliche Abweichungen in bestimmten Bereichen jeder einzelnen Ist-Kennlinie von den sogenannten Soll-Kennlinien gibt. Die Korrektur erfolgt über die Anpassung der Stellgröße p_{YSoll}, hier im konkreten Fall sowohl der Stellgrößen p_{Ymax} und p_{Ymin}, wobei die Korrektur für jeden einzelnen Betriebspunkt vorgenommen wird. Dies gilt in Analogie auch für das minimale vom Retarder erzeugbare Bremsmoment M_{Ret-min}.

Das Einlesen der korrigierten Stellgrößen p_{YSoll} neu für die einzelnen Betriebspunkte n erfolgt dabei zumindest in einen beschreibbaren und lesbaren Speicher. Dieser kann der hydrodynamischen Komponente 1, insbesondere dem hydrodynamischen Retarder, beigefügt sein, beispielsweise am Gehäuse angebracht. Denkbar ist es auch, das korrigierte sich aus einer Vielzahl dieser einzelnen Soll-Stellgrößenwerte ergebende Soll-Kennfeld p_{YSoll} in die der hydrodynamischen Komponente 1, insbesondere dem hydrodynamischen Retarder zugeordnete Steuereinrichtung 8, einzulesen.

In Analogie gelten die in den Figuren 1 bis 3 dargelegten Ausführungen auch für andere hydrodynamische Komponenten, hydrodynamische Kupplungen oder Wandler. Im ersten Fall umfasst die Komponente eine Primärrad und ein Sekundärrad, die miteinander einen mit Betriebsmittel befüllbaren Arbeitsraum bilden. Im zweiten Fall ist zusätzlich noch wenigstens ein Leitrad vorgesehen. Auch bei diesen wird die übertragbare Leistung, insbesondere das übertragbare Moment optimiert durch Anpassung der Stellgröße, insbesondere des Stelldruckes oder des Füllungsgrades.

Die erfindungsgemäße Lösung ist nicht auf die hier beschriebene Möglichkeit der Änderung der Stellgröße p_{YSoll} beschränkt. Denkbar kann, wie bereits ausgeführt, eine Änderung stufenweise um einen bestimmten vordefinierten oder vorgegebenen Korrekturwert sein. Dieser Korrekturwert kann berechnet werden oder aber frei festgelegt. Dies hängt insbesondere auch damit zusammen, in welchem Abstand derartige Korrekturen erfolgen sollen. Die Korrektur kann bei aufeinanderfolgenden Durchläufen des bestimmten Betriebspunktes oder aber nur bei jeder i-ten Einstellung des Betriebspunktes n erfolgen.

### Bezugszeichenliste

- 1: Fahrzeug
- 2: Antriebsstrang
- 3: Antriebsmaschine
- 4: Rad
- 5: Bremseinrichtung
- 6: Betriebsmittelversorgungssystem
- 7: Arbeitsraum
- 8: Einlass
- 9: Auslass
- 10: Stelleinrichtung
- 11: Steuergerät
- 12: Speicher
- 13: Speicher
- 14: Einrichtung zur Vorgabe eines Fahrerwunsches nach Verzögerung des Fahrzeuges
- 15: Erfassungseinrichtung
- 16: Vergleichseinrichtung
- 17: Sollwert Korrektureinrichtung
- 18: Erfassungseinrichtung

## Patentansprüche

1. Verfahren zur Optimierung der Betriebsweise einer in einem Antriebsstrang eines Fahrzeuges integrierten hydrodynamischen Komponente mit einer dieser zugeordneten Stelleinrichtung,
1.1 bei welchem für eine hydrodynamische Komponente bestimmten Typs eine Soll-Kennlinie oder ein Soll-Kennfeld in einer Speichereinheit hinterlegt ist, wobei jedem Betriebspunkt der Soll-Kennlinie oder des Soll-Kennfeldes eine Soll-Stellgröße zugeordnet ist;
1.2 bei welchem in Abhängigkeit einer Vorgabe nach Übertragung eines bestimmten Momentes die Stelleinrichtung mit der dem einzustellenden Betriebspunkt zugeordneten Soll-Stellgröße angesteuert wird;
1.3 bei welchem
- ein aktueller Ist-Wert (nᵢₛₜ₋ₙ; Mᵢₛₜ₋ₙ) wenigstens einer einen Betriebspunkt (nᵢₛₜ₋ₙᵢ; Mᵢₛₜ₋ₙᵢ) wenigstens mittelbar charakterisierenden Größe bei jedem Übertragungsvorgang ermittelt wird,
- der Ist-Wert (nᵢₛₜ₋ₙ; Mᵢₛₜ₋ₙ) für den jeweiligen Betriebspunkt (nᵢₛₜ₋ₙᵢ; Mᵢₛₜ₋ₙᵢ) mit dem Soll-Wert aus dem Soll-Kennfeld für diese Betriebspunkte verglichen wird,
- bei Abweichung des Ist-Wertes vom Soll-Wert die Stellgröße zur wenigstens mittelbaren Beeinflussung des Ist-Wertes (nᵢₛₜ₋ₙ; Mᵢₛₜ₋ₙ) für diesen Betriebspunkt geändert wird;
- **dadurch gekennzeichnet, dass** die geänderte Soll-Stellgröße (p_{Ysoll-neu}) für den jeweiligen Betriebspunkt (nᵢₛₜ₋ₙᵢ; Mᵢₛₜ₋ₙᵢ) als neue Soll-Stellgröße gespeichert wird, welche bei gewünschter erneuter Einstellung des jeweiligen Betriebspunktes (nᵢₛₜ₋ₙᵢ; Mᵢₛₜ₋ₙᵢ) als Soll-Stellgröße (p_{Ysoll}) zur Ansteuerung der Stelleinrichtung (10) verwendet wird.

2. Verfahren zur Ausnutzung der verfügbaren Bremsleistung in einem Fahrzeug mit einem Antriebsstrang, umfassend eine Antriebsmaschine und eine hydrodynamische Bremseinrichtung mit einer dieser zugeordneten Stelleinrichtung;
2.1 bei welchem für einen Retarder bestimmten Typs eine Soll-Kennlinie oder ein Soll-Kennfeld in einer Speichereinheit hinterlegt ist, wobei jedem Betriebspunkt der Soll-Kennlinie oder des Soll-Kennfeldes eine Soll-Stellgröße zugeordnet ist;
2.2 bei welchem in Abhängigkeit einer Vorgabe nach Erzeugung eines bestimmten Bremsmomentes oder einer gewünschten Verzögerung die Stelleinrichtung mit der dem einzustellenden Betriebspunkt zugeordneten Soll-Stellgröße angesteuert wird;
2.3 bei welchem
- ein aktueller Ist-Wert (nᵢₛₜ₋ₙ; Mᵢₛₜ₋ₙ) wenigstens einer einen Betriebspunkt (nᵢₛₜ₋ₙᵢ; Mᵢₛₜ₋ₙᵢ) beschreibenden den Bremsvorgang wenigstens mittelbar charakterisierenden Größe bei jedem Bremsvorgang ermittelt wird,
- der Ist-Wert (nᵢₛₜ₋ₙ; Mᵢₛₜ₋ₙ) für den jeweiligen Betriebspunkt (nᵢₛₜ₋ₙᵢ; Mᵢₛₜ₋ₙᵢ) mit dem Soll-Wert aus dem Soll-Kennfeld für diese Betriebspunkte verglichen wird,
- bei Abweichung des Ist-Wertes vom Soll-Wert die Stellgröße zur wenigstens mittelbaren Beeinflussung des Ist-Wertes (nᵢₛₜ₋ₙ; Mᵢₛₜ₋ₙ) für diesen Betriebspunkt geändert wird;
- **dadurch gekennzeichnet, dass** die geänderte Soll-Stellgröße (p_{Ysoll-neu}) für den jeweiligen Betriebspunkt (nᵢₛₜ₋ₙᵢ; Mᵢₛₜ₋ₙᵢ) als neue Soll-Stellgröße gespeichert wird, welche bei gewünschter erneuter Einstellung des jeweiligen Betriebspunktes (nᵢₛₜ₋ₙᵢ; Mᵢₛₜ₋ₙᵢ) als Soll-Stellgröße (p_{Ysoll}) zur Ansteuerung der Stelleinrichtung (10) verwendet wird.

3. Verfahren nach Anspruch 2, **gekennzeichnet durch** folgende Merkmale:
3.1 bei jedem Bremsvorgang wird eine das Bremsmoment wenigstens mittelbar beschreibende Größe als ein Ist-Wert der den Bremsvorgang beschreibenden Größe fortlaufend über die Drehzahl des Rotorschaufelrades (R) oder einer mit diesem gekoppelten Elementes ermittelt;
3.2 bei Abweichung des Ist-Wertes vom Soll-Wert wird der Steuerdruck zur Änderung der Füllungsgrades (FG) im Arbeitsraum (7) des Retarders (5) adaptiert.

4. Verfahren nach einem der Ansprüche 1 bis 3, **dadurch gekennzeichnet, dass** die Änderung der Stellgröße (p_{Ysoll}) um einen vorgegebenen oder berechenbaren Korrekturwert (K) erfolgt.

5. Verfahren nach Anspruch 4, **dadurch gekennzeichnet, dass** die Änderung der Stellgröße jeweils um einen festen Korrekturwert (K) erfolgt.

6. Verfahren nach einem der Ansprüche 1 bis 5, **dadurch gekennzeichnet, dass** den einzelnen Soll-Werten ein Toleranzbereich zugeordnet ist, wobei eine adaptive Änderung bis zum Erreichen des Toleranzbereiches vorgenommen wird.

7. Verfahren nach einem der Ansprüche 1 bis 6, **dadurch gekennzeichnet, dass** für jeden abgespeicherten Wert der Stellgröße zusätzlich die Größe der Abweichung des eingestellten Istwertes vom Sollwert mit ermittelt und im Ist-Kennfeld abgespeichert wird.

8. Verfahren nach einem der Ansprüche 1 bis 7, **dadurch gekennzeichnet, dass** für jeden abgespeicherten Wert der Stellgröße bei einem bestimmten Istwert zusätzlich die Temperatur des Betriebsmittels oder eine diese wenigstens mittelbar charakterisierende Größe mit ermittelt und im Ist-Kennfeld abgespeichert wird.

## Claims

1. A method of optimising the operating mode of a hydrodynamic component integrated in the drive train of a vehicle, fitted with said related adjustment device,
1.1 wherein a theoretical characteristic curve or a theoretical characteristic field is stored in a memory unit for a hydrodynamic component of given type, wherein a theoretical variable is allocated to each operating point of the theoretical characteristic curve or of the theoretical characteristic field;
1.2 wherein depending on a demand for a specific torque the adjustment device is initiated with the theoretical variable allocated to the operating point to be corrected;
1.3 wherein
- a current actual value (n-_{actual-n}; M_{actual-n}) of an at least indirect characterising value for an operating point (n_{actual-ni}; M_{actual-ni}) is determined at each transmission cycle,
- the actual value (n_{actual-n}; M_{actual-n}) for the corresponding operating point (n_{actual-ni}; M_{actual-ni}) is compared with the theoretical value obtained from the theoretical characteristic field for these operating points,
- in case of deviation between the actual value and the theoretical value, the variable is modified for influencing the actual value (n_{actual-n}; M_{actual-n}) at least indirectly for this operating point;
- **characterised in that** the modified theoretical variable (P_{y theoretical-new}) is stored for the corresponding operating point (n_{actual-ni}; M_{actual-ni}) as a new theoretical variable, which is used in case of renewed desired adjustment of the corresponding operating point (n_{actual-ni}; M_{actual-ni}) as a theoretical variable (P_{y theoretical} for operating the adjustment device (10).

2. A method of using the available breaking power in a vehicle fitted with a drive train, comprising a drive machine and a hydrodynamic braking device fitted with an adjustment device related thereto;
2.1 where in a theoretical characteristic curve or a theoretical characteristic field is stored in a memory unit for a retarder of given type, wherein a theoretical variable is allocated to each operating point of the theoretical characteristic curve or of the theoretical characteristic field;
2.2 wherein depending on an input requirement for transmission of a set braking torque or after a requested delay, the adjustment device is initiated with the theoretical variable allocated to the operating point to be corrected;
2.3 wherein:
- a current actual value (n_{actual-n}; M_{actual-n}) of an at least indirect characterising value describing the braking cycle for an operating point (n_{actual-ni}; M_{actual-ni}) is determined at each braking cycle,
- the actual value (n_{actual-n}; M_{actual-n}) for the corresponding operating point (n_{actual-ni}, M_{actual-ni}) is compared with the theoretical value obtained from the theoretical characteristic field for these operating points,
- in case of deviation between the actual value and the theoretical value, the variable is modified for influencing the actual value (n_{actual-n}; M_{actual-n}) at least indirectly for this operating point;
- **characterised in that** the modified theoretical variable (P_{y theoretical-new}) is stored for the corresponding operating point (n_{actual-ni}; M_{actual-ni}) as a new theoretical variable, which is used in case of renewed desired adjustment of the corresponding operating point (n_{actual-ni}; M_{actual-ni}) as a theoretical variable (P_{y theoretical}) for operating the adjustment device (10).

3. A method according to claim 2, **characterised by** the following features:
3.1 at each braking cycle, a value at least indirectly describing the braking torque is obtained continuously as an actual value of the value describing the braking cycle by means of the revolution speed of the rotor vane wheel (R) or of an element coupled therewith;
3.2 in case of deviation between the actual value and the theoretical value, the control pressure is adapted for modifying the filling level (FG) in the work space (7) of the retarder (5).

4. A method according to any of the claims 1 to 3, **characterised in** the variable is modified (P_{v theoretical}) by a preset or computable correction value (K).

5. A method according to claim 4, **characterised in that** the variable is always modified by a fixed correction value (K).

6. A method according to any of the claims 1 to 5, **characterised in that** a tolerance region is allocated to the various theoretical values, whereas an adaptive modification is performed until the tolerance region has been reached

7. A method according to one of the claims 1 to 6, **characterised in that** for each stored value of the variable, the deviation value between the adjusted actual value and the theoretical value is also obtained, and then stored in the actual characteristic field.

8. A method according to any of the claims 1 to 7, **characterised in that** for each stored value of the variable for a determined actual value, the temperature of the operating means or an at least indirectly characterising value is obtained additionally, and then stored in the actual characteristic field.

## Revendications

1. Procédé d'optimisation de mode de fonctionnement d'un composant hydrodynamique intégré dans le train d'entraînement d'un véhicule, pourvu de son dispositif de réglage associé,
1.1 au niveau duquel une courbe caractéristique théorique ou un diagramme caractéristique théorique est rangé dans une unité mémoire pour un composant hydrodynamique de type donné, dans lequel une variable de réglage théorique est assignée à chaque point de fonctionnement de la courbe caractéristique théorique ou du diagramme caractéristique théorique;
1.2 au niveau duquel le dispositif de réglage est asservi à la variable de réglage théorique associée au point de fonctionnement à corriger en fonction de la situation obtenue concernat la transmission d'un couple donné;
1.3 dans lequel
- on obtient une valeur réelle actuelle (nr_{éel-n}; M_{réel-n}) au moins pour une variable de caractérisation au moins indirecte un point de fonctionnement (n_{réel-ni}; M_{réel-ni}) à chaque cycle de transmission,
- on compare la valeur réelle (n_{réel-n}, M_{réel-n}) pour le point de fonctionnement correspondant (n_{réel-ni}, M_{réel-ni}) à la valeur théorique tirée du diagramme caractéristique théorique pour ces différents points de fonctionnement,
- en présence d'un écart entre la valeur réelle et la valeur théorique, on modifie la variable de réglage pour influencer au moins de façon indirecte la valeur réelle (n_{réel-n}; M_{réel-n}) correspondant audit point de fonctionnement;
- **caractérisé en ce que** la variable de réglage théorique modifiée (P_{y réel-nouveau}) est mémorisée comme nouvelle variable de réglage théorique pour le point de fonctionnement correspondant (n_{réel-ni};M_{réel-ni}), que l'on utilisera alors pour chaque nouveau réglage désiré du point de fonctionnement correspondant (n_{réel-ni}; M_{réel-ni}) comme variable de réglage théorique (P_{y théorique}) pour solliciter le dispositif de réglage (10).

2. Procédé d'utilisation de la puissance de freinage disponible dans un véhicule disposant d'un train d'entraînement, comprenant une machine d'entraînement et un dispositif de freinage procédé d'optimisation pourvu de son dispositif de réglage associé;
2.1 au niveau duquel une courbe caractéristique théorique ou un diagramme caractéristique théorique est rangé dans une unité mémoire pour un retardateur de type donné, dans lequel une variable de réglage théorique est assignée à chaque point de fonctionnement de la courbe caractéristique théorique ou du diagramme caractéristique théorique;
2.2 au niveau duquel le dispositif de réglage est asservi à la variable de réglage théorique associée au point de fonctionnement à corriger en fonction de la situation obtenue concernat la obtention d'un couple de freinage donné ou après un retard désiré;
2.3 au niveau duquel
- on obtient une valeur réelle actuelle (n_{réel-n}; M_{réel-n}) au moins pour une variable de caractérisation au moins indirecte décrivant le cycle de freinage un point de fonctionnement (n_{réel-ni}; M_{réel-ni}) à chaque cycle de freinage,
- on compare la valeur réelle (n_{réel-n}, M_{réel-n}) pour le point de fonctionnement correspondant (n_{réel-ni}, M_{réel-ni}) à la valeur théorique tirée du diagramme caractéristique théorique pour ces différents points de fonctionnement,
- en présence d'un écart entre la valeur réelle et la valeur théorique, on modifie la variable de réglage pour influencer au moins de façon indirecte la valeur réelle (n_{réel-n}; M_{réel-n}) correspondant audit point de fonctionnement;
- **caractérisé en ce que** la variable de réglage théorique modifiée (P_{y réel-nouveau})
est mémorisée comme nouvelle variable de réglage théorique pour le point de fonctionnement correspondant (n_{réel-ni}; M_{réel-ni}), que l'on utilisera alors pour chaque nouveau réglage désiré du point de fonctionnement correspondant (n_{réel-ni}; M_{réel-ni}) comme variable de réglage théorique (Py théorique) pour solliciter le dispositif de réglage (10).

3. Procédé selon la revendication 2, présentant les caractéristiques suivantes:
3.1 à chaque cycle de freinage, on obtient une variable de description au moins indirecte du couple de freinage comme valeur réelle de la variable de description du cycle de freinage de manière continue à l'aide de la vitesse de rotation de la roue à aubes de rotor (R) ou d'un élément couplé à celle-ci;
3.2 en présence d'un écart entre la valeur réelle et la valeur théorique, on adpate la pression de commande au changement du niveau de remplissage (FG) dans l'espace de travail (7) du retardateur (5).

4. Procédé selon l'une des revendications 1 à 3, **caractérisé en ce que** la variable de réglage (P_{v théorique}) est modifiée d'une valeur de correction (K) prédéterminée ou calculable.

5. Procédé selon la revendication 4 **caractérisé en ce que** la variable de réglage est toujours modifée en fonction d'une valeur de correction (K) fixe.

6. Procédé selon l'une des revendications 1 à 5, **caractérisé en ce que** une zone de tolérance est assignée aux diverses valeurs théoriques, tandis que l'on procède à une modification adaptative jusqu'à ce que l'on atteigne la zone de tolérance.

7. Procédé selon l'une des revendications 1 à 6, **caractérisé en ce que** pour chaque valeur de variable de réglage en mémoire on obtient en outre l'ampleur de l'écart entre la valeur réelle corrigée et la valeur de consigne pour la mémoriser dans le diagramme caractéristique réel.

8. Procédé selon l'une des revendications 1 à 7, **caractérisé en ce que** pour chaque valeur de variable de réglage en mémoire correspondant à une valeur réelle donnée, on obtient en outre la température du moyen de fonctionnement ou bien une variable de caractérisation au moins indirecte de celle-ci pour la mémoriser dans le diagramme caractéristique réel.
